(19) Europäisches Patentamt
European Patent Office
Office européen des brevets

(11) **EP 4 546 220 A1**

(12) **EUROPEAN PATENT APPLICATION**
published in accordance with Art. 153(4) EPC

(43) Date of publication:
**30.04.2025 Bulletin 2025/18**

(21) Application number: **23857728.2**

(22) Date of filing: **23.08.2023**

(51) International Patent Classification (IPC):
**G06N 3/08** (2023.01)        **G06N 3/04** (2023.01)

(52) Cooperative Patent Classification (CPC):
**G06N 20/00; G06N 3/04; G06N 3/045; G06N 3/048;
G06N 3/063; G06N 3/08**

(86) International application number:
**PCT/KR2023/012499**

(87) International publication number:
**WO 2024/043696 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.08.2022 KR 20220105710
08.09.2022 KR 20220114282**

(71) Applicant: **Samsung Electronics Co., Ltd.
Suwon-si, Gyeonggi-do 16677 (KR)**

(72) Inventors:
• **LEE, Junhyuk**
  **Suwon-si, Gyeonggi-do 16677 (KR)**
• **PARK, Hyunbin**
  **Suwon-si, Gyeonggi-do 16677 (KR)**
• **YANG, Seungjin**
  **Suwon-si, Gyeonggi-do 16677 (KR)**

(74) Representative: **HGF
HGF Limited
1 City Walk
Leeds LS11 9DX (GB)**

(54) **ELECTRONIC DEVICE FOR PERFORMING OPERATION USING ARTIFICIAL INTELLIGENCE
MODEL AND METHOD FOR OPERATING ELECTRONIC DEVICE**

(57)    An electronic device according to various embodiments comprises a processor and a memory comprising instructions, and when the instructions are executed by the processor, the electronic device may: load and compile an artificial intelligence model stored in the memory; determine whether the compiled artificial intelligence model comprises a first type of activation function; when the compiled artificial intelligence model comprises the first type of activation function, if a specified value exists in a feature map, skip an operation on the specified value, and perform an operation on a value to be operated on immediately after the specified value; and when the compiled artificial intelligence model does not comprise the first type of activation function, perform an operation on input values of the feature map. Various other embodiments are possible.

FIG. 2B

## Description

[Technical Field]

Certain embodiments of the disclosure relate to an electronic device and an operation method of an electronic device for performing calculation using an artificial intelligence model.

[Background Art]

An artificial neural network (ANN) refers to a computational architecture that models a biological brain. Based on the artificial neural network, deep learning, machine learning, or the like may be realized. A deep neural network or deep learning as examples of the artificial neural network may have a multilayer structure including multiple layers.

Artificial intelligence models can be used in various manners to analyze vision and sound. Research and development on hardware related to artificial intelligence models has been actively performed to achieve effective operation of artificial intelligence models in a mobile terminal. For example, in addition to studies for optimizing a multiply-accumulate (MAC) calculation performed in a deep learning artificial intelligence model, hardware structure improvement technologies considering artificial intelligence models are researched and applied.

Furthermore, a data processing system may include at least one processor known as a central processing unit (CPU). The data processing unit may include at least one other processor, for example, a neural processing unit (NPU) used for various types of specialized processing.

[Disclosure of Invention]

[Technical Problem]

Artificial intelligence models may be operated in a neural processing unit (NPU) and studies on hardware structures have been actively conducted to improve the performance of artificial intelligence models and improve power efficiency.

To improve power efficiency, a zero-skipping function may be used to omit a multiply accumulate calculation (MAC) with respect to 0 included in an input value (e.g., a result value from previous hidden layer and a feature map). The zero-skipping function may use an activation function ReLU and may be effectively applied in case that the ratio of 0 is high. For example, when the activation function, rectified linear unit (ReLU), is used, the ratio of 0 is high in a feature map and thus the effect of the zero-skipping function may be maximized.

However, since there are various types of activation functions used in artificial intelligence models, and characteristics thereof are also various, in case that the ratio of 0 in the feature map, which is an output value of the activation function, is not high, the efficiency of the zero skipping function may decrease.

An embodiment disclosed herein suggests a method for operating hardware effectively by dividing an activation layer of an artificial intelligence model.

An embodiment of the disclosure provides an electronic device and an operation method of an electronic device, which activate or deactivate a zero-skipping function in response to a fact that an activation function included in an artificial intelligence model is a function of a specified type.

An embodiment of the disclosure may provide an electronic device and an operation method of an electronic device, which activate or deactivate a feature map compression function in response to a fact that an activation function included in an artificial intelligence model is a function of a specified type.

[Solution to Problem]

According to certain embodiments, an electronic device comprises: a processor; and memory storing instructions, wherein the instructions are executed by the processor, the electronic device to: load and compile an artificial intelligence model stored in the memory; determine whether the compiled artificial intelligence model includes a first-type activation function; when the first-type activation function is included in the compiled artificial intelligence model, skip a calculation with respect to a designated value when the designated value exists in a feature map and calculate a value to be calculated subsequent to the designated value; and when the first-type activation function is not included in the compiled artificial intelligence model, perform a calculation with respect to input values of the feature map.

According to certain embodiments, an operation method of an electronic device comprises: loading and compiling an artificial intelligence model stored in a memory; determining whether the compiled artificial intelligence model includes a first-type activation function; when the first-type activation function is included in the compiled artificial intelligence model, skipping a calculation with respect to a designated value when the designated value exists in a feature map and calculating a value to be calculated subsequent to the designated value; and when the first-type activation function is not included in the combined artificial intelligence model, performing a calculation with respect to input values of the feature map.

[Advantageous Effects of Invention]

An embodiment disclosed herein may provide an electronic device for reducing power consumption in a calculation of an artificial intelligence model.

An embodiment disclosed herein may provide an electronic device for effectively compressing a feature map corresponding to a result value in a calculation of an artificial intelligence model.

According to an embodiment disclosed herein, depending on an activation function included in an artificial intelligence model, power consumption may be effectively reduced by omitting a calculation with respect to a designated value included in an input of a hidden layer.

According to an embodiment disclosed herein, depending on an activation function included in an artificial intelligence model, a feature map may be effectively compressed by compressing with values other than a designated value included in an output of a hidden layer.

[Brief Description of Drawings]

In connection with the description of the drawings, like or similar reference numerals may be used for like or similar elements.

FIG. 1 is a block diagram illustrating an electronic device in a network environment according to an embodiment of the disclosure.

FIG. 2A is a view illustrating an example of a neural network (NN) structure according to an embodiment of the disclosure.

FIG. 2B is a block diagram illustrating an electronic device according to an embodiment of the disclosure.

FIG. 3 is a flowchart illustrating a method for performing a calculation by determining whether to activate a first function and/or a second function in a calculation using an artificial intelligence model by a processor according to an embodiment of the disclosure.

FIG. 4 is a view illustrating an artificial intelligence model configuration according to an embodiment of the disclosure.

FIG. 5 is a view depicting graphs of activation functions according to an embodiment of the disclosure.

FIG. 6 is a view illustrating a graph indicating a ratio of output values of 0 in an artificial intelligence model using a first-type function according to an embodiment of the disclosure.

FIG. 7 is a view illustrating a first function according to certain embodiments disclosed herein.

FIG. 8 is a view illustrating a second function according to certain embodiments disclosed herein.

FIG. 9 is a view depicting graphs of a ReLU function and a PReLU function according to an embodiment of the disclosure.

FIG. 10 is a flowchart illustrating a method for performing a calculation by determining whether to activate a first function in a calculation using an artificial intelligence model by a processor according to an embodiment of the disclosure.

[Mode for the Invention]

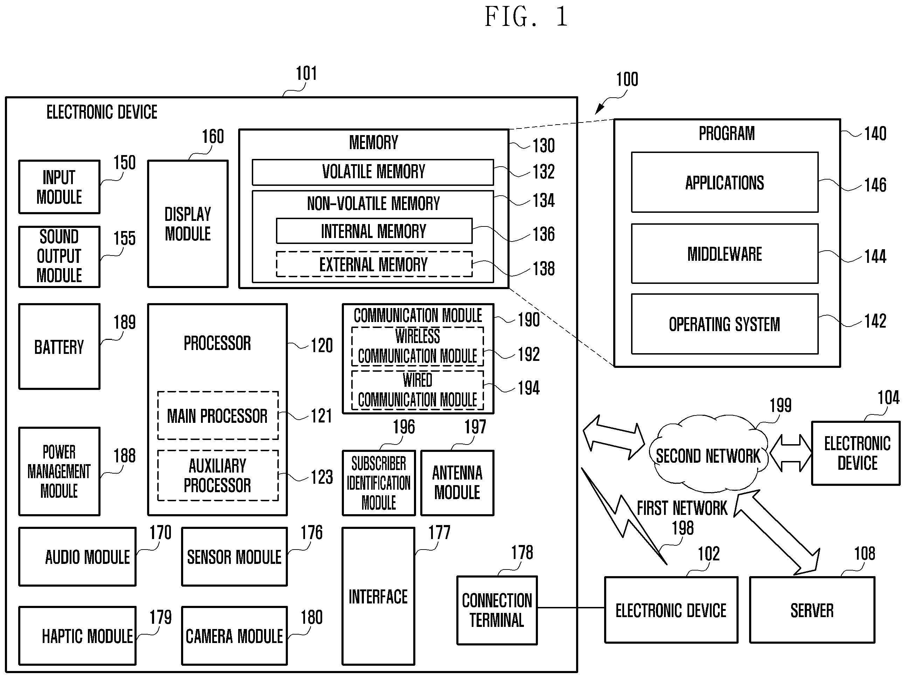

FIG. 1 describes an electronic device that can be configured to use artificial intelligence.

FIG. 1 is a block diagram illustrating an electronic device 101 in a network environment 100 according to certain embodiments.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121. The term "processor" shall be understood to refer to both the singular and plural contexts in this document.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 and/or an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) (e.g., speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., through wires) or wirelessly. According to an embodiment, the interface 177 may include, for example, a high-definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., an application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, Wi-Fi direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to certain embodiments, the antenna module 197 may form mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., an mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

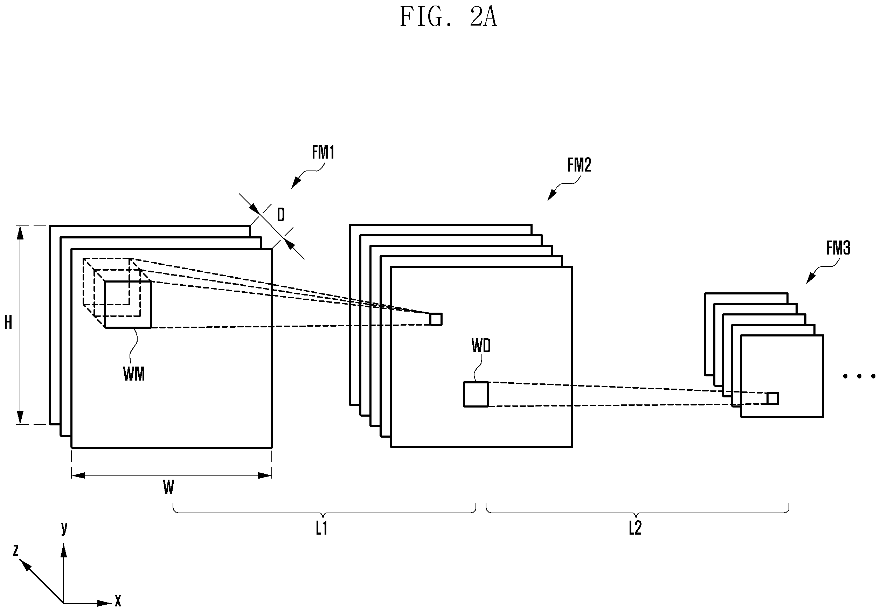

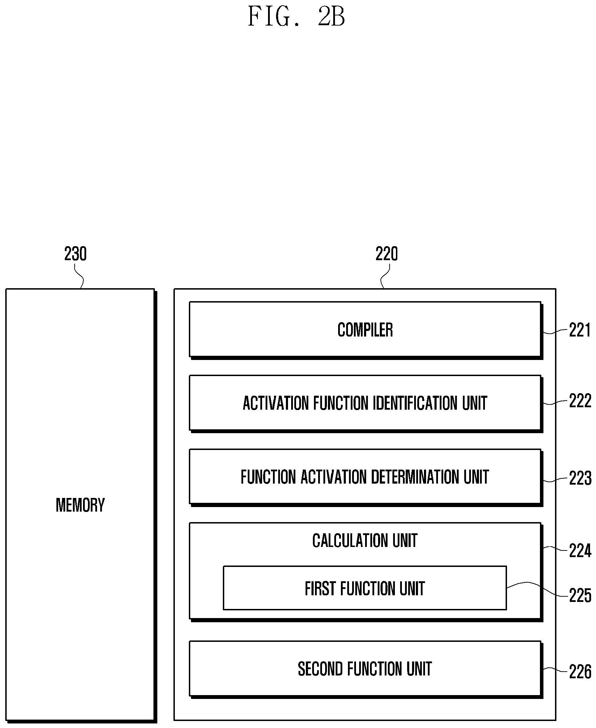

The auxiliary processor 123 may include a neural processing unit. The neural processing unit may perform various functions on an artificial intelligence model. An artificial intelligence model is shown in FIGs. 2a and 2b.

FIG. 2A is a view illustrating an example of a neural network (NN) structure according to an embodiment of the disclosure.

Referring to FIG. 2A, an artificial neural network model may include multiple layers L1 to Ln. Each of the multiple layers L1 to Ln may correspond to a linear layer or a non-linear layer. According to an embodiment, at least one linear layer and at least one non-linear layer may be combined to be referred to as one layer. For example, the linear layer may include a convolution layer and a fully connected layer. The non-linear layer may include a sampling layer, a pooling layer, and an activation layer.

A calculation based on an artificial intelligence may be performed in a central processing unit (CPU) and/or a neural processing unit (NPU).

In FIG. 2A, an operation of a model or a layer may be an operation of a central processing unit (CPU) and/or a neural processing unit (NPU).

By way of example, a first layer L1 may correspond to a convolution layer and a second layer L2 may correspond to a sampling layer. The artificial neural network model may further include an activation layer and may further include other layers for performing other types of calculations.

In an embodiment, each of multiple layers L1, L2 may receive input image data or a feature map (FM). The feature map of a layer LN may be generated from a previous layer L(N-1) as an input feature map. The layer LN may operate the input feature map to generate an output feature map. Here, the feature map may refer to data in which various characteristics of input data are expressed. Feature maps FM1, FM2, and FM3 may have forms of a two-dimensional matrix or a three-dimensional matrix. The feature maps FM1, FM2, and FM3 may have a width W (also referred to as a column), a height H (also referred to as a row), and a depth D. Each of the width, height, and depth may correspond to the x-axis, y-axis, and z-axis of the coordinates, respectively. Here, the depth D may be referred to as the number of channels.

In an embodiment, the first layer L1 may perform convolution of a first feature map FM1 and a weight map WM to generate a second feature map FM2. The weight map WM may filter the first feature map FM1 and thus may be referred to as a filter or a kernel. For example, the depth of the weight map WM, that is, the number of channels may be identical to the depth of the first feature map FM1, for example, the number of channels, and convolution may be performed on the same channel of the weight map WM and the first feature map FM1. The weight map WM may be shifted in a crossing manner by using the first input feature map FM1 as a sliding window. A shifting amount may be denoted by a "stride length" or a "stride". During each shift, weights included in the weight map WM may be multiplied by and added to all feature values of a portion overlapping the first feature map FM1. As convolution is performed on the first feature map FM1 and the weight map WM, one channel of the second feature map FM2 may be generated.

In FIG. 2A according to certain embodiment, one weight map WM is described, but convolution may be actually performed on multiple weight maps and the first feature map FM1, and thus multiple channels of the second feature map FM2 may be generated. In other words, the number of channels of the second feature map FM2 may correspond to the number of weight maps WM.

In an embodiment, the second layer L2 may generate a third feature map FM3 by changing a spatial size of the second feature map FM2.

For example, the second layer L2 may correspond to a sampling layer. The second layer L2 may perform up-sampling or down-sampling. The second layer L2 may select a portion of data included in the second feature map FM2. For example, a two-dimensional window WD may be shifted on the second feature map FM2 in units of a size (e.g., 4*4 matrix) of a window WD. Here, the second layer L2 may select a value of a specific position (e.g., row 1 column 1) in an area overlapping the window WD. The second layer L2 may output the selected data (e.g., a value of a specific position) as data of the third feature map FM3.

For another example, the second layer L2 may correspond to a pooling layer. In this case, the second layer L2 may select a maximum value (or an average value of feature values) of feature values of an area overlapping the window WD in the second feature map FM2. The second layer L2 may output the selected data (e.g., the maximum value of selected feature values (or an average value of feature values)) as data of the third feature map FM3.

Accordingly, the third feature map FM3 obtained by changing the spatial size from the second feature map FM2 may be generated. The number of channels of the third feature map FM 3 may be equal to the number of channels of the second feature map FM2.

According to an embodiment of the disclosure, a speed of a calculation of the sampling layer may be faster than that of the pooling layer, and the sampling layer may improve a quality (e.g., in terms of peak signal to nose ratio (PSNR)) of an output image. For example, the calculation by the pooling layer may require the maximum value of feature values or the average value of feature value and therefore, require more calculation time then the calculation of the sampling layer.

According to an embodiment, the second layer L2 may not be limited to the sampling layer or the pooling layer. For example, the second layer L2 may be a convolution layer similar to the first layer L1. The second layer L2 may perform convolution of the second feature map FM2 and the weight map WM to generate the third feature map FM3. In this case, the weight map WM having performed a convolution calculation in the second layer L2 may be different from the weight map WM having performed a convolution calculation in the first layer L1.

A N-th feature may be generated in a N-th layer via multiple layers including the first layer L1 and the second layer L2 according to an embodiment. The N-th feature map may be input to a reconstruction layer position at a back end of an artificial neural network for outputting output data. The reconstruction layer may generate an output image based on the N-th feature map. The reconstruction layer may receive multiple feature maps, such as the first feature map FM1, the second feature map FM2,..., the N-1-th feature map in addition to the N-th feature map and may generate an output image based on the received multiple feature maps.

For example, the reconstruction layer may correspond to a convolution layer or a deconvolution layer. According to an embodiment, the reconstruction layer may be implemented as another type of layer capable of reconstructing an image from a feature map.

To improve power efficiency, a zero-skipping function may be used to omit a multiply accumulate calculation (MAC) with respect to 0 included in an input value (e.g., a result value from previous hidden layer and a feature map) of the artificial intelligence model. The zero-skipping function may use an activation function ReLU and may be effectively applied in case that the ratio of 0 is high. For example, when the activation function, rectified linear unit (ReLU), is used, the ratio of 0 is high in a feature map and thus the effect of the zero-skipping function may be maximized.

To increase the efficiency of the zero-skipping function, the electronic device may activate or deactivate a feature map compression function when a specific type of activation function is included in the artificial intelligence model.

FIG. 2B is a block diagram illustrating an electronic device according to an embodiment of the disclosure.

The memory 230 may store an artificial intelligence model, such as the artificial intelligence model of FIG. 2A. The processor 220 via complier 221 may load and compile the artificial intelligence model from the memory 230. The function activation determination unit 223 determines whether the artificial intelligence model includes a first-type activation function. When the first-type activation function is included, the calculation unit 224 can skip a calculation with respect to a designated value when the designated value exists in a feature map and the calculation unit 224 may calculate a value to be calculated subsequent to the designated value with the first function unit 225. When the first-type activation function is not included in the artificial intelligence model, the first function unit 225 can be deactivated, thereby preventing calculation of the value.

Referring to FIG. 2B, the electronic device 200 (e.g., the electronic device 101 in FIG. 1) may include a processor 220 (e.g., the processor 120 in FIG. 1) and/or a memory 230 (e.g., the memory 130 in FIG. 1). The configuration components included in FIG. 2B may correspond to a portion of configurations included in the electronic device 200 and the electronic device 200 may include various configuration components shown in FIG. 1.

In an embodiment, the memory 230 may temporarily or non-temporarily store data associated with an artificial intelligence model. For example, the memory 230 may store data associated with an artificial model, such as a layer, a weight value, and/or an operation of the artificial model, and update data associated with the artificial intelligence model based on an output value of the artificial intelligence model. For example, the memory 230 may store an output value of an artificial intelligence model.

The artificial intelligence model according to an embodiment may be written in a designated language and may correspond to a neural network model including multiple layers and/or operations. The artificial model according to an embodiment may correspond to one of various types of networks such as a convolution neural network (CNN), a region with convolution neural network (R-CNN), a region proposal network (RPN), a recurrent neural network (RNN), a stacking-based deep neural network (S-DNN), a state-space dynamic neural network (S-SDNN), a deconvolution network, a deep belief network (DBN), a restricted Boltzmann machine (RBM), a fully convolutional network, a long short-term memory (LSTM) network, and a classification network. The artificial model according to an embodiment may learn designated data, acquire input data, and perform a calculation based on the acquired input data to generate output data.

The artificial model according to an embodiment may include an input layer, a hidden layer, and an output layer. The input layer may relate to an input value input to the artificial model. The hidden layer may perform a multiply-accumulate (MAC) calculation and an activation calculation with respect to the input value to output a feature map. The output layer may relate to a result value of the calculation performed in the hidden layer.

According to an embodiment, the artificial intelligence model may be stored in the memory 230. In certain embodiments, the memory 230 may also store a plurality of executable instructions, executable by the processor 220.

According to an embodiment, a calculation based on an artificial intelligence may be performed in the processor 220 (e.g., a central processing unit (CPU)) and/or a neural processing unit (NPU).

In an embodiment, the processor 220 may perform the calculation based on the artificial intelligence model stored the memory 230.

The processor 220 according to an embodiment may include at least one processor. For example, the processor 220 may include a central processing unit (CPU) (e.g., the main processor 121 in FIG. 1) and/or a neural processing unit (NPU) (e.g., the auxiliary processor 123 in FIG. 1).

The processor 220 according to an embodiment may include a compiler 221, an activation function identification unit 222, a function activation determination unit 223, a calculation unit 224 including a first function unit 225, and/or a second function unit 226.

The compiler 221 according to an embodiment may compile a source code written in a specific language into a target code processable in a target program and/or target hardware. For example, the compiler 221 may invoke (or load) the artificial model from the memory 230 and compile the artificial intelligence model into a binary usable by the processor 220.

The activation function identification unit 222 according to an embodiment may identify an activation function included in the compiled artificial intelligence model. For example, the activation function identification unit 222 may identify whether a first-type function is included in the activation function of the compiled artificial intelligence model.

The function activation determination unit 223 according to an embodiment may determine whether to activate a first function and/or a second function based on whether the first-type function is included in the activation function of the compiled artificial intelligence model identified by the activation function identification unit 222, and activate or deactivate the first function unit 225 and/or the second function unit 226.

For example, the function activation determination unit 223 may activate the first function and/or the second function in response to the first-type function included in the activation function of the compiled artificial intelligence model.

For example, the function activation determination unit 223 may deactivate the first function and the second function in response to the first-type function not included in the activation function of the compiled artificial intelligence model.

According to an embodiment, the first-type function may be a rectified linear unit (ReLU) function. The ReLU function is a function that outputs 0 when an input value is negative and outputs an input value as it is when the input value is positive.

The calculation unit 224 according to an embodiment may cause the hidden layer to perform a multiply-accumulate (MAC) calculation and an activation calculation with respect to the input value so as to output a feature map. The MAC calculation may be a calculation of multiplying an input value by a corresponding weight, and summing the multiplied values. The activation calculation may be a calculation of inputting a result of the MAC calculation to an activation function and outputting a resultant value.

The first function unit 225 according to an embodiment may perform the first function of omitting a calculation with respect to a designated value included in an input value of the hidden layer.

For example, the first function may correspond to a zero-skipping function. The zero-skipping function may correspond to a function for omitting a MAC calculation with respect to 0 included in an input value (e.g., a result value from previous hidden layer and a feature map).

The second function unit 226 according to an embodiment may perform the second function of compressing with values excluding a designated value included in an output value of the hidden layer.

For example, the second function may be a feature map compression function. The feature map compression function may be a function of extracting a value other than 0 with respect to an output value (e.g., a feature map) of the hidden layer to compress the feature map by the processor 220.

The second function unit 226 according to an embodiment may store the compressed feature map in the memory 230.

In a description related to FIG. 2B, at least a portion of the components which has been described to be included in the processor 220 may be a software (SW) module executed in the processor 220 and in this case, an operation performed by the components may be understood as an operation of the processor 220.

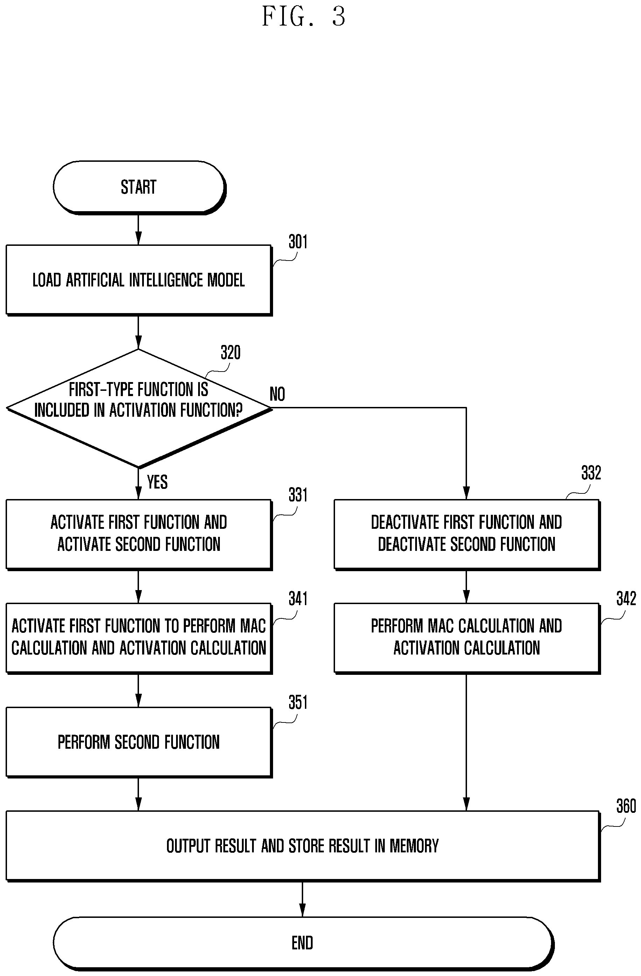

FIG. 3 is a flowchart illustrating a method for performing a calculation by determining whether to activate a first function and/or a second function in a calculation using an artificial intelligence model by a processor 220 according to an embodiment of the disclosure.

After compiling the artificial intelligence model, a first function and a second function are either activated or deactivated by on whether there is a first-type of activation function in the compiled artificial intelligence model. When the first function and the second function are deactivated, a multiple accumulate calculation can be performed.

According to an embodiment, the processor (e.g., the processor 220 in FIG. 2B) may load and compile an artificial intelligence model in operation 310.

The processor 220 according to an embodiment may invoke (or load) an artificial intelligence model stored in a memory (the memory 230 in FIG. 2B) and compile the artificial intelligence model into a binary usable by the processor 220.

The processor 220 may identify whether an activation function included in the artificial intelligence model include a first-type function in operation 320. The first-type function may be a rectified linear unit (ReLU) function. The ReLU function may include a function that outputs 0 when an input value is negative and outputs an input value as it is when the input value is positive. That is:

$$f(x) = 0, \text{ when } x < 0,$$

and

$$f(x) = x, \text{ when } x >= 0$$

According to an embodiment, in operation 331, the processor 220 may activate a first function and/or a second function in response to the activation function including the first-type function (e.g., Yes in operation 320).

According to an embodiment, the first function may be a function of omitting a calculation with respect to a designated value included in an input value of the hidden layer.

For example, the first function may correspond to a zero-skipping function. The zero-skipping function may correspond to a function for omitting a MAC calculation with respect to 0 included in an input value (e.g., a result value from previous hidden layer and a feature map).

According to an embodiment the second function may be a function of compressing with values excluding a designated value included in an output value of the hidden layer.

For example, the second function may be a feature map compression function. The feature map compression function may be a function of extracting a value other than 0 with respect to an output value (e.g., a feature map) of the hidden layer to compress the feature map by the processor 220.

According to an embodiment, the processor 220 may activate the first function and/or the second function in response to including at least one first-type function in the hidden layer.

According to an embodiment, the processor 220 may activate the first function and/or the second function with respect to the hidden layer including the first-type function. For example, in multiple hidden layers, the processor 220 may activate the first function in a MAC calculation of a layer next to the hidden layer including the first-type function.

According to an embodiment, in operation 341, the processor 220 may activate the first function to perform the MAC calculation and an activation calculation.

According to an embodiment, the processor 220 may perform the MAC calculation and the activation calculation by using, as an input value, a feature map which is a result value of an input layer and/or a previous hidden layer.

According to an embodiment, in operation 331, in response to activation of the first function, the processor 220 may omit the MAC calculation with respect to 0 of the input value and perform the MAC calculation by bringing a value other than 0 to be calculated next. The MAC calculation may be a calculation of multiplying an input value by a corresponding weight, and summing the multiplied values.

According to an embodiment, the processor 220 may perform the activation calculation by inputting a result of the MAC calculation to an activation function.

According to an embodiment, the processor 220 may perform the MAC calculation and the activation calculation to generate a feature map corresponding to a result value.

According to an embodiment, the hidden layer may include at least one layer. In case that the hidden layer includes multiple layers, the feature map corresponding to the result value of the MAC calculation and the activation calculation of a previous hidden layer may be used as an input value of a next hidden layer.

According to an embodiment, in case that the previous hidden layer includes the first-type function, the processor 220 may perform the MAC calculation and the activation calculation by activating the first function in the next hidden layer with respect to the feature map corresponding to the output value of the previous hidden layer.

According to an embodiment, in operation 351, the processor 220 may perform the second function.

According to an embodiment, the processor 220 may perform the second function of operation 351 after a calculation of the hidden layer of operation 341 is completed.

According to an embodiment, the processor 220 may perform feature map compression with respect to the feature map corresponding to the output value of the hidden layer in response to activation of the second function in operation 331. For example, in case that the second function is activated, the processor 220 may compress the feature map with values other than 0 of the feature map.

According to an embodiment, in operation 332, the processor 220 may deactivate the first function and/or the second function in response to not including the first-type function (e.g., No in operation 320) in the activation function.

According to an embodiment, in operation 342, the processor 220 may perform the MAC calculation and an activation calculation.

According to an embodiment, the processor 220 may perform the MAC calculation and the activation calculation by using, as an input value, a feature map which is a result value of an input layer and/or a previous hidden layer.

According to an embodiment, the processor 220 may perform the MAC calculation with respect to all input values in response to deactivation of the first function.

According to an embodiment, the processor 220 may perform the activation calculation by inputting a result of the MAC calculation to an activation function.

According to an embodiment, the processor 220 may perform the MAC calculation and the activation calculation to generate a feature map corresponding to a result value.

According to an embodiment, the hidden layer may include at least one layer. In case that the hidden layer includes multiple layers, the feature map corresponding to the result value of the MAC calculation and the activation calculation of a previous hidden layer may be used as an input value of a next hidden layer.

According to an embodiment, in operation 360, the processor 220 may output a result and store the result in the memory 230.

According to an embodiment, the processor 220 may store the feature map compressed by performing the second function of operation 351 in the memory 230.

According to an embodiment, the processor 220 may store the feature map output by performing the MAC calculation and the activation calculation of operation 342 in the memory 230.

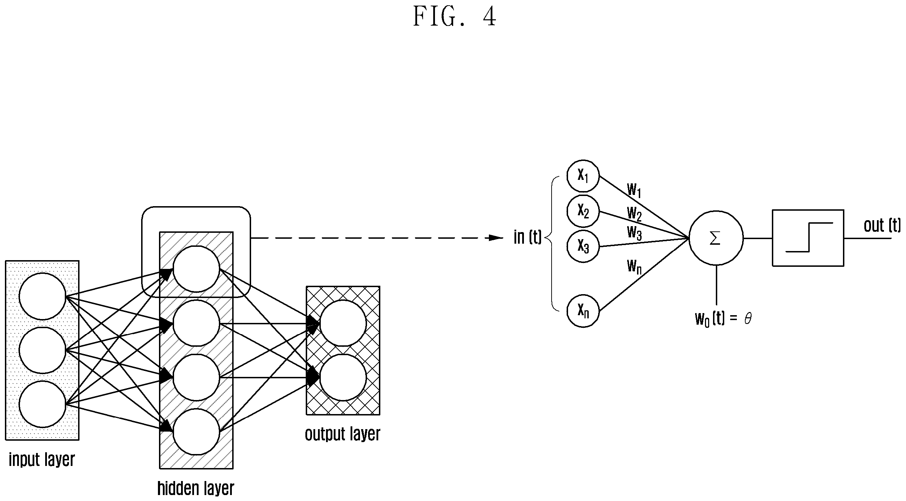

FIG. 4 is a view illustrating an artificial intelligence model configuration according to an embodiment of the disclosure. The input layer includes inputs $x_1 ... x_n$. The hidden layer may perform a multiply accumulate calculation, where values $x_1 ... x_n$ are multiplied by a corresponding plurality of weights $w_1 ... w_n$. The output layer may provide an output result.

The artificial model according to an embodiment may include an input layer, a hidden layer, and an output layer.

In an embodiment, the input layer is a layer related to an input value input to the artificial model.

In an embodiment, the hidden layer may perform a multiply-accumulate (MAC) calculation and an activation calculation with respect to the input value to output a feature map.

In an embodiment, the MAC calculation may be a calculation of multiplying an input value by a corresponding weight and summing the multiplied values. For example, the MAC calculation may correspond to a calculation of $x_1 * w_1 + x_2 * w_2 + x_3 * w_3 + \cdots + x_n * w_n$. That is, a plurality of inputs $x_1 ... x_n$, can be multiplied by a corresponding plurality of weights $w_1 ... w_n$.

In an embodiment, the activation calculation may be a calculation of inputting a result of the MAC calculation to an activation function and outputting a resultant value. The activation calculation may be of various types. For example, the activation function may include any one of a sigmoid function, a tangent function, a ReLU function, a Leaky ReLU function, a maxout function, and/or an exponential linear unit (ELU) function but is not limited thereto.

In an embodiment, the hidden layer may include at least one layer. For example, in case that the hidden layer includes a first hidden layer and a second hidden layer, the first hidden layer may perform the MAC calculation and the activation calculation based on an input value of the input layer and output a feature map. The feature map corresponding to a result value of the first hidden layer may become an input value of the second hidden layer. The second hidden layer may perform the MAC calculation and the activation calculation based on the feature map corresponding to the result value of the first hidden layer.

In an embodiment, the output layer may be a layer related to a result value of the calculation performed in the hidden layer.

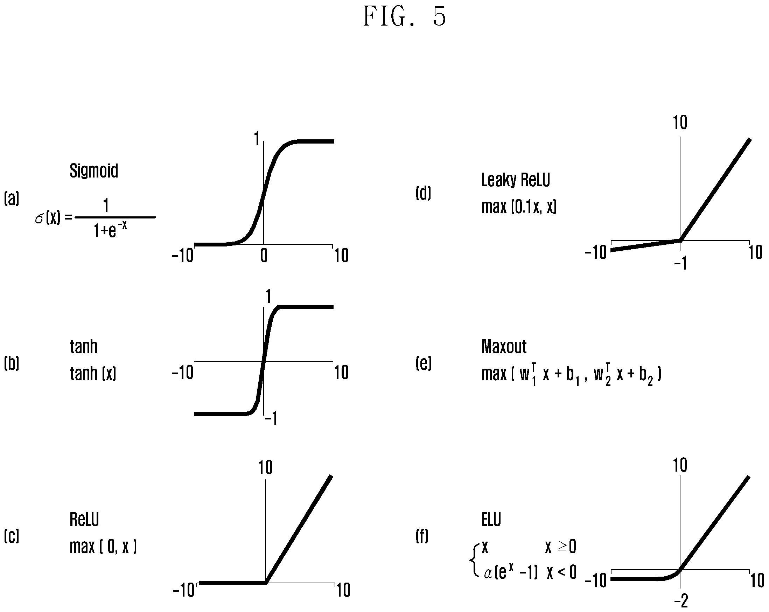

FIG. 5 is a view depicting graphs of activation functions according to an embodiment of the disclosure. The activation functions may include any one of the (a) sigmoid function, (b) tanh function, (c) the ReLU function, (d) the Leaky ReLU function, (e) the maxout function, and (f) the ELU function.

A hidden layer of an artificial intelligence model according to an embodiment may include various types of activation calculations. For example, the activation calculations may include a sigmoid function, a tangent function, a ReLU function, a Leaky ReLU function, a maxout function, and/or an exponential linear unit (ELU) function. However, the disclosure is not limited thereto.

Graph (a) according to an embodiment is a graph of a sigmoid function.

The sigmoid function is an S-shaped function that outputs a value between 0 and 1 depending on a value of x.

The sigmoid function according to an embodiment may be as shown in Equation 1 below.

【Equation 1】

$$\sigma(x) = \frac{1}{1 + e^{-x}}$$

Graph (b) according to an embodiment is a graph of a tangent function.

The tangent function according to an embodiment may be as shown in Equation 2 below.

【Equation 2】

$$\tanh(x)$$

Graph (c) according to an embodiment is a graph of a rectified linear unit (ReLU) function (a gradient function).

The ReLU function is a function that outputs 0 when an input value is negative and outputs an input value as it is when the input value is positive. Accordingly, the output value of the ReLU function may include 0.

The ReLU function according to an embodiment may be as shown in Equation 3 below.

【Equation 3】

$$\max(0, x)$$

Graph (d) according to an embodiment is a graph of a Leaky ReLU function.

The Leaky ReLU function according to an embodiment may be as shown in Equation 4 below.

【Equation 4】

$$\max(0.1x, x)$$

Graph (e) according to an embodiment is a graph of a maxout function.

The maxout function according to an embodiment may be as shown in Equation 5 below.

【Equation 5】

$$\max(w_1^T x + b_1, x_2^T x + b_2)$$

Graph (f) according to an embodiment is a graph of an exponential linear unit (ELU) function.

The ELU function according to an embodiment may be as shown in Equation 6 below.

【Equation 6】

$$\begin{cases} x & x \geq 0 \\ \alpha(e^x - 1) & x < 0 \end{cases}$$

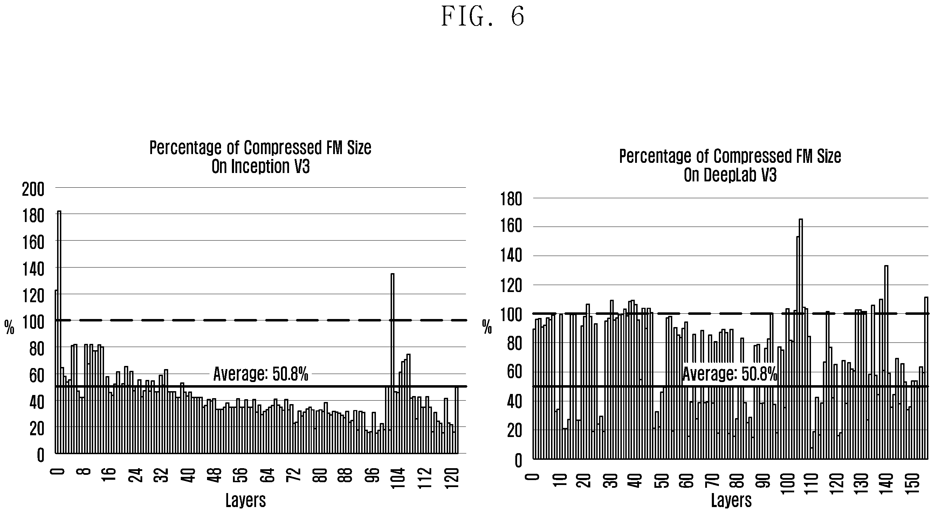

FIG. 6 is a view illustrating a graph indicating a ratio of output values of 0 in an artificial intelligence model using a first-type function according to an embodiment of the disclosure.

The first-type function according to an embodiment may be a rectified linear unit (ReLU) function.

FIG. 6 is a graph showing a ratio of output values of 0 in each of an inceptionv3 artificial intelligence model and a deeplabv3 artificial intelligence model using the first type function as the activation function.

Referring to the graph, in the inceptionv3 AI model, about 50.8% of the output values may be 0, and in the deeplabv3 AI model, about 53% of the output values may be 0.

For example, the ratio of 0 in the output value of the artificial intelligence model using the first-type function as the activation function may be as high as about 50%.

Accordingly, in the artificial intelligence model using the first-type function, unnecessary calculation operations may be omitted in case that a processor (e.g., the processor 220 in FIG. 2B) activates the first function, and compression efficiency may be increased in case of activating the second function.

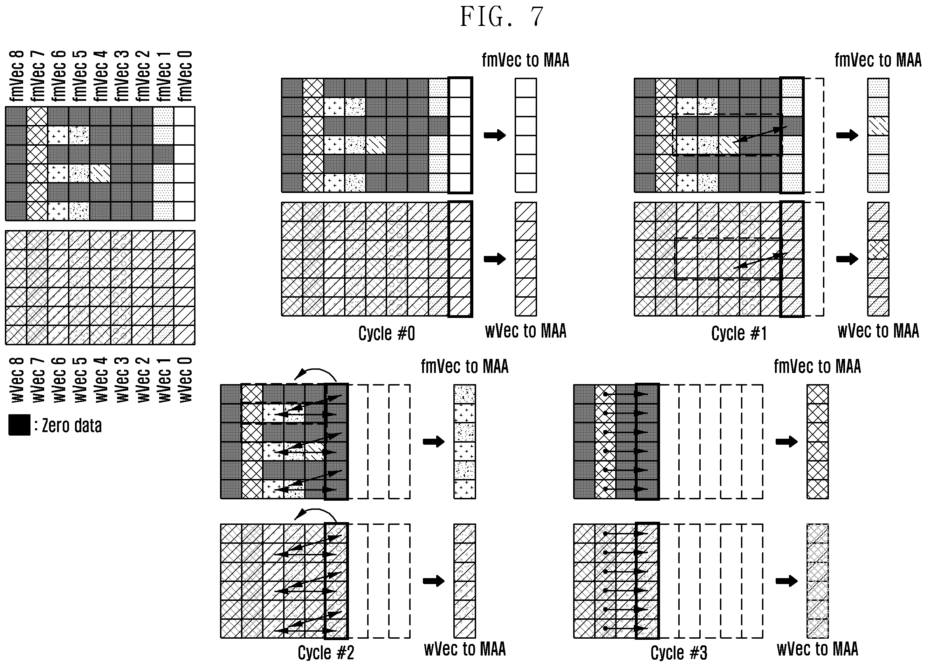

FIG. 7 is a view illustrating a first function according to certain embodiments disclosed herein.

According to an embodiment, the first function may correspond to a zero-skipping function.

For example, the zero-skipping function may correspond to a function for omitting multiplication calculation with respect to 0 in the MAC calculation in case that 0 exists in an input value (e.g., a result value from previous hidden layer and a feature map).

In FIG. 7, a black cell means 0, and another color cell may mean a value other than 0.

In an embodiment, in case that the zero-skipping function is activated, a processor (e.g., the processor 220 in FIG. 2b) may omit the MAC calculation with respect to 0 (e.g., the black cell in the drawing) in the input value and perform the MAC calculation by loading a value (e.g., cells other than the black cells in the drawing) other than 0 to be calculated.

Accordingly, calculation time of the artificial intelligence model may be reduced.

In the MAC calculation, the processor 220 may output a result by summing values obtained by multiplying a feature map, which is a result value of a previous hidden layer, and a weight.

The processor 220 may multiply a fmVec value of the feature map and a wVec value of the corresponding weight.

In Cycle #0, the processor 220 may multiply fmVec0 and wVec0.

In Cycle #1, since a third value of fmVec1 is 0, the processor 220 may bring a fourth value of fmVec4 which is a value other than 0 to be calculated next and multiply the fourth value and a value of wVec4 to perform the calculation.

In Cycle #2, the processor 220 does not perform a calculation with respect to 0 of fmVec2, fmVec3, and fmVec4 and may bring and multiply a second value of fmVec5, a second value of fmVec6, a fourth value of fmVec5, a fourth value of fmVec6, a sixth value of fmVec5, and a sixth value of fmVec6, which are values other than 0 to be calculated next, by a corresponding second value of wVec5, a second value of wVec6, a fourth value of wVec5, a fourth value of wVec6, a sixth value of wVec5, and a sixth value of wVec6, respectively.

In Cycle #3, the processor 220 may multiply a value of fmVec7, which is a value other than 0 to be calculated next by a value of wVec7 to perform the calculation.

In the case of not performing the zero-skipping function, the processor 220 needs to perform the calculation nine times in total from fmVec0 to fmVec 8, whereas in the case of performing the zero-skipping function, the MAC calculation may be completed with 3 calculations.

Accordingly, in case that the zero-skipping function is activated, the number of calculations may be reduced for a feature map containing many 0s.

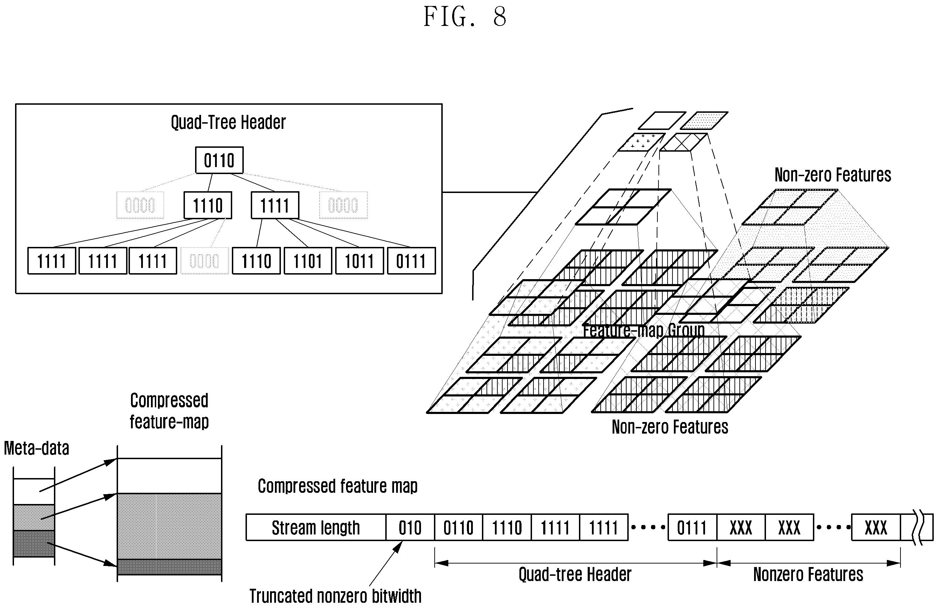

FIG. 8 is a view illustrating a second function that is a feature map compression function that excludes values that are 0.

According to an embodiment, the second function may correspond to a feature map compression function (feature map lossless compressor).

The feature map compression function may be a function of extracting a value other than 0 with respect to an output value (e.g., a feature map) of the hidden layer to compress the feature map by a processor (e.g., the processor 220 in FIG. 2B).

In case that the feature map compression function is activated, the processor 220 may compress the feature map with values other than 0 of the feature map.

Referring to FIG. 8, the processor 220 may compress a feature map with values of "0110", "1110", "1111", "1111", "1111", "1111", "1110", "1101", "1011", and "0111" excluding a value of "0000" from the feature map.

The processor 220 may store the compressed feature map in a memory (e.g., the memory 230 in FIG. 2B).

Accordingly, in case that the zero-skipping function is activated, a capacity stored in the memory 230 may be reduced for a feature map containing many 0s.

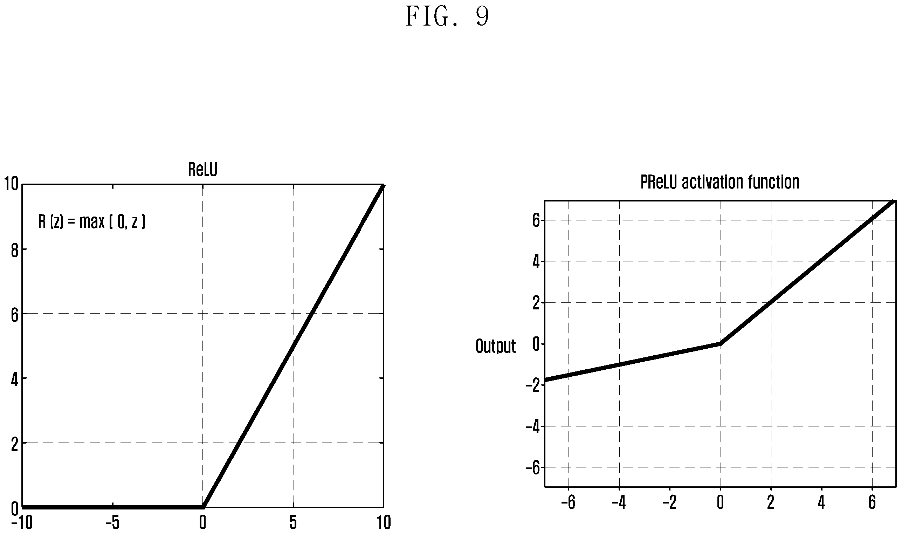

FIG. 9 is a view depicting graphs of a ReLU function and a PReLU function according to an embodiment of the disclosure.

A hidden layer of an artificial intelligence model according to an embodiment may include various types of activation calculations. For example, the activation function may include a ReLU function and/or a PReLU function. However, the disclosure is not limited thereto.

In an embodiment, the ReLU function may be a function that outputs 0 when an input value is negative and outputs an input value as it is when the input value is positive. Accordingly, in case that the hidden layer includes the ReLU function, 0s may be included in the feature map in a high ratio.

In an embodiment, the PReLU function may be a function that outputs 1/2 of an input value when the input value is negative and outputs an input value as it is when the input value is positive. Accordingly, in case that the hidden layer includes the PReLU function, 0s may be included in the feature map in a low ratio.

Accordingly, in case that the hidden layer includes an activation function, such as the ReLU function, of which an output value includes many 0s in a high ratio, activation of the first function (e.g., the zero-skipping function) may increase the efficiency of the calculation and activation of the second function (e.g., the feature map compression function) may increase the compression efficiency of data stored in a memory. On the other hand, in case that the hidden layer includes an activation function, such as the PReLU function, of which an output value includes many 0s in a low ratio, activation of the first function (e.g., the zero-skipping function) may reduce the efficiency of the calculation due to an operation of identifying 0s and even if the second function (e.g., the feature map compression function) is activated, the compression efficiency may be low.

The table 1 may be a result of comparing current consumption when the first function (the zero-skipping function) and the second function are activated according to a type of function included in the hidden layer.

[Table 1]

|  | Activation function | First operation mode | Second operation mode | Third operation mode |
|---|---|---|---|---|
| Performance (inf/sec) | ReLU | About 26.22 | About 39.47 | About 44.4 |
|  | Non-ReLU | About 26.23 | About 38.45 | About 44.64 |
| Current consumption (mA) | ReLU | About 650.8 | About 874.7 | About 952.7 |
|  | Non-ReLU | About 685.9 | About 894.5 | About 1005.5 |

The first operation mode, the second operation mode, and the third operation mode in Table 1 may be modes operated when measuring performance of NPU hardware (HW) and consumed currents.

Referring to Table 1, in terms of performance, in case that the first function and the second function are activated, a difference in performance between an artificial intelligence model including a ReLU and an artificial intelligent model including a non-ReLU may not be significant.

On the other hand, in terms of current consumption, in case that the first function and the second function are activated, it may be identified that current consumption is higher in an artificial intelligent model including a non-ReLU than in an artificial intelligence model including a ReLU.

For example, even though the ratio of 0s is low, the first function performs unnecessary calculations to identify 0s, and thus a feature map of the artificial intelligence model including the non-ReLU may have increased current consumption.

Furthermore, even though the ratio of 0s is low, the second function performs unnecessary operations to exclude 0s, and thus a feature map of the artificial intelligence model including the non-ReLU may have increased current consumption.

Therefore, as an embodiment of the disclosure, as the processor 220 identifies whether to activate the first function and/or the second function according to a type of an activation function included the artificial intelligence model and determines activation of the first function and/or the second function, not only current consumption may be reduced, but also data may be compressed efficiently.

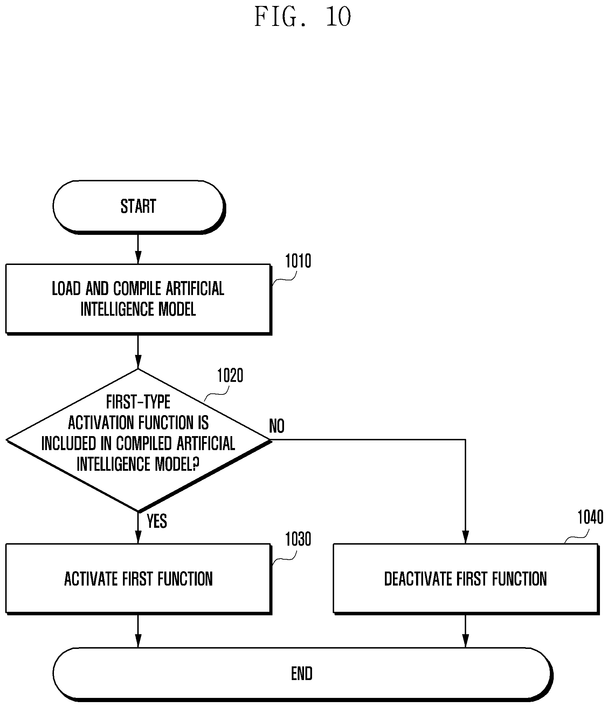

FIG. 10 is a flowchart illustrating a method for performing a calculation by determining whether to activate a first function in a calculation using an artificial intelligence model by a processor 220 according to an embodiment of the disclosure. A first function is activated or deactivated based on whether the compiled artificial intelligence model includes a first-type activation function.

According to an embodiment, the processor (e.g., the processor 220 in FIG. 2B) may load and compile an artificial intelligence model in operation 1010.

The processor 220 according to an embodiment may invoke (or load) an artificial intelligence model stored in a memory (the memory 230 in FIG. 2B) and compile the artificial intelligence model into a binary usable by the processor 220.

According to an embodiment, the processor 220 may identify whether an activation function included in the compiled artificial intelligence model includes a first-type function in operation 1020.

According to an embodiment, the first-type function may be a rectified linear unit (ReLU) function. The ReLU function may include a function that outputs 0 when an input value is negative and outputs an input value as it is when the input value is positive.

According to an embodiment, in operation 1030, the processor 220 may activate the first function in response to including the first-type function in the activation function (e.g., Yes in operation 1020).

According to an embodiment, the first function may be a function of omitting a calculation with respect to a designated value included in an input value of the hidden layer.

For example, the first function may correspond to a zero-skipping function. The zero-skipping function may correspond to a function for omitting a MAC calculation with respect to 0 included in an input value (e.g., a result value from previous hidden layer and a feature map).

According to an embodiment, in operation 1040, the processor 220 may deactivate the first function in response to not including the first-type function (e.g., No in operation 1020) in the activation function.

According to an embodiment, the processor 220 may perform the MAC calculation with respect to all input values in response to deactivation of the first function.

According to an embodiment, the processor 220 may perform the activation calculation by inputting a result of the MAC calculation to an activation function.

According to an embodiment, the processor 220 may perform the MAC calculation and the activation calculation to generate a feature map corresponding to a result value.

According to an embodiment, the hidden layer may include at least one layer. **In** case that the hidden layer includes multiple layers, the feature map corresponding to the result value of the MAC calculation and the activation calculation of a previous hidden layer may be used as an input value of a next hidden layer.

The technical problems solved by the disclosure are not limited to the above technical problems and those skilled in the art will more clearly understand other technical problems from the following description.

An electronic device according to an embodiment may include a processor and memory storing instructions, wherein the instructions, when executed by the processor, cause the electronic device may load and compile an artificial intelligence model stored in the memory, determine whether the compiled artificial intelligence model includes a first-type activation function, when the first-type activation function is included in the compiled artificial intelligence model, skip a calculation with respect to a designated value when the designated value exists in a feature map and calculate a value to be calculated subsequent to the designated value, and when the first-type activation function is not included in the complied artificial intelligence model, perform a calculation with respect to input values of the feature map.

In the electronic device according to an embodiment, the first-type activation function may be a Rectified Linear Unit (ReLU) function.

In an embodiment, when the instructions are executed by the processor, the electronic device may, when the first-type activation function in the complied artificial intelligence model is included in the complied artificial intelligence model, compress a feature map by excluding the designated value when the designated value exists in the feature map, and when the first-type activation function is not included in the compiled artificial intelligence model0 deactivate the compress the feature map.

In the electronic device according to an embodiment, skipping the calculation with respect to the designated value and calculating the value to be calculated subsequent to the designated value includes performing a zero-skipping function that skips a calculation for "0" if "0" exists in the feature map.

In the electronic device according to an embodiment, compressing the feature map is a function of extracting a value excluding a value of "0" from the feature map and compressing the feature map based on the extracted value.

In an embodiment, when the instructions are executed by the processor, the electronic device is configured to, in response to calculate the value when a feature map corresponding to a result value of a previous hidden layer of the artificial intelligence model is used as an input value and "0" exists in the feature map, a calculation with respect to "0" may be skipped, a calculation with respect to a value other than "0" to be calculated next may be performed, and calculation with respect to a multiply accumulate calculation (MAC) result may be performed.

In an embodiment, when the instructions are executed by the processor, the electronic device is configured to, in response to compressing the feature map, compress a feature map with values other than 0 from the feature map corresponding to an output value of a hidden layer after a calculation of the hidden layer of the artificial intelligence model is completed, and store the compressed feature map in the memory.

The operation method of an electronic device according to an embodiment may include an operation of loading and compiling an artificial intelligence model stored in a memory, an operation of determining whether the compiled artificial intelligence model includes a first-type activation function, an operation of when the first-type activation function is included in the complied artificial intelligence model, skipping a calculation with respect to a designated value when the designated value exists in a feature map and calculating a value to be calculated subsequent to the designated value, and an operation of when the first-type activation function is not included in the combined artificial intelligence model, performing a calculation with respect to input values of the feature map.

In the operation method of the electronic device according to an embodiment, the first-type activation function may be a Rectified Linear Unit (ReLU) function.

The operation method of the electronic device according to an embodiment may include an operation of when the first-type activation function is included in the complied artificial intelligence model, compressing a feature map by excluding the designated value when the designated value exists in a feature map, and when the first-type activation function is not included in the compiled artificial intelligence model, deactivating the compress the feature map.

In the operation method of the electronic device according to an embodiment, skipping the calculation with respect to the designated value and calculating the value to be calculated subsequent to the designated value includes performing a zero-skipping function that skips a calculation for "0" if "0" exists in the feature map.

In the operation method of the electronic device according to an embodiment, compressing the feature map includes is a function of extracting a value excluding a value of "0" from the feature map and compressing the feature map based on the extracted value.

The operation method of the electronic device according to an embodiment may include an operation of skipping a calculation with respect to "0" in response to activation of the first function, in case that a feature map corresponding to a result value of a previous hidden layer of the artificial intelligence model is used as the input value and "0" exists in the feature map and performing a calculation with respect to a value other than "0" to be calculated next, and an operation of performing a calculation with respect to a multiply accumulate calculation (MAC) result.

The operation method of the electronic device according to an embodiment may include an operation of compressing a feature map with values other than 0 from the feature map corresponding to an output value of a hidden layer after a calculation of the hidden layer of the artificial intelligence model is completed in response to activation of the second function, and an operation of storing the compressed feature map in the memory.

According to certain embodiments, a non-transitory computer-readable medium stores a plurality of instructions executable by a processor, wherein execution of the plurality of instruction by the processor causes the processor to perform a plurality of operations comprising: loading and compiling an artificial intelligence model stored in a memory; determining whether the compiled artificial intelligence model includes a first-type activation function; when the first-type activation function is included in the compiled artificial intelligence model, skipping a calculation with respect to a designated value when the designated value exists in a feature map and calculating a value to be calculated subsequent to the designated value; and when the first-type activation function is not included in the compiled artificial intelligence model, performing a calculation with respect to input values of the feature map.

According to certain embodiments, the first-type activation function is a Rectified Linear Unit (ReLU) function.

According to certain embodiments, the plurality of operations further comprises: when the first-type activation function is included in the compiled artificial intelligence model, compressing a feature map by excluding the designated value when the designated value exists in a feature map, and when the first-type activation function is not included in the compiled artificial intelligence model, deactivating the compress the feature map.

According to certain embodiments, skipping the calculation with respect to the designated value and calculating the value to be calculated subsequent to the designated value includes performing a zero-skipping function that skips a calculation for "0" if "0" exists in the feature map.

According to certain embodiments, compressing the feature map is a function of extracting a value excluding a value of "0" from the feature map and compressing the feature map based on the extracted value.

According to certain embodiments, the plurality of operations further comprises: in response to compressing the feature map, compressing a feature map with values other than "0" from the feature map corresponding to an output value of a hidden layer after a calculation of the hidden layer of the artificial intelligence model is completed; and storing the compressed feature map in the memory.

It will be appreciated by a person skilled in the art that effects which may be achieved from the disclosure are not limited to the effects described above and other effects that are not described above will be clearly understood from the following detailed description.

The electronic device according to certain embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that certain embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., through wires), wirelessly, or via a third element.

As used in connection with certain embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Certain embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to certain embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to certain embodiments, each component (e.g., a module or a program) of the above-described components may include a single entity or multiple entities, and some of the multiple entities may be separately disposed in different components. According to certain embodiments, one or more of the above-described components may be omitted, or one or more other components may be added. Alternatively or additionally, a plurality of components (e.g., modules or programs) may be integrated into a single component. **In** such a case, according to certain embodiments, the integrated component may still perform one or more functions of each of the plurality of components in the same or similar manner as they are performed by a corresponding one of the plurality of components before the integration. According to certain embodiments, operations performed by the module, the program, or another component may be carried out sequentially, in parallel, repeatedly, or heuristically, or one or more of the operations may be executed in a different order or omitted, or one or more other operations may be added.

## Claims

**1.** An electronic device comprising:

> a processor; and
> memory storing instructions,
> wherein the instructions, when executed by the processor, cause the electronic device to:
>
> > load and compile an artificial intelligence model stored in the memory;
> > determine whether the compiled artificial intelligence model includes a first-type activation function;
> > when the first-type activation function is included in the compiled artificial intelligence model, skip a calculation with respect to a designated value when the designated value exists in a feature map and calculate a value to be calculated subsequent to the designated value; and
> > when the first-type activation function is not included in the compiled artificial intelligence model, perform a calculation with respect to input values of the feature map.

2. The electronic device of claim 1, wherein the first-type activation function is a Rectified Linear Unit (ReLU) function.

3. The electronic device of claim 2, wherein the instructions, when executed by the processor, further cause the electronic device to:

when the first-type activation function is included in the compiled artificial intelligence model, compress a feature map by excluding the designated value when the designated value exists in the feature map; and
when the first-type activation function is not included in the compiled artificial intelligence model, deactivate the compress the feature map..

4. The electronic device of claim 2, wherein skipping the calculation with respect to the designated value and calculating the value to be calculated subsequent to the designated value includes performing a zero-skipping function that skips a calculation for "0" if "0" exists in the feature map.

5. The electronic device of claim 3, wherein compressing the feature map is a function of extracting a value excluding a value of "0" from the feature map and compressing the feature map based on the extracted value.

6. The electronic device of claim 4, wherein the instructions, when executed by the processor, further cause the electronic device to:

in response to calculate the value, when a feature map corresponding to a result value of a previous hidden layer of the artificial intelligence model is used as an input value and "0" exists in the feature map, skip a calculation with respect to "0" and perform a calculation with respect to a value other than "0" to be calculated next; and
perform calculation with respect to a multiply accumulate calculation (MAC) result.

7. The electronic device of claim 5, wherein the instructions, when executed by the processor, further cause the electronic device to:

in response to compressing the feature map, compress a feature map with values other than "0" from the feature map corresponding to an output value of a hidden layer after a calculation of the hidden layer of the artificial intelligence model is completed; and
store the compressed feature map in the memory.

8. An operation method of an electronic device, the method comprising:

loading and compiling an artificial intelligence model stored in a memory;
determining whether the compiled artificial intelligence model includes a first-type activation function;
when the first-type activation function is included in the compiled artificial intelligence model, skipping a calculation with respect to a designated value when the designated value exists in a feature map and calculating a value to be calculated subsequent to the designated value; and
when the first-type activation function is not included in the combined artificial intelligence model, performing a calculation with respect to input values of the feature map.

9. The method of claim 8, wherein the first-type activation function is a Rectified Linear Unit (ReLU) function.

10. The method of claim 9, further comprising:

when the first-type activation function is included in the compiled artificial intelligence model, compressing a feature map by excluding the designated value when the designated value exists in a feature map; and
when the first-type activation function is not included in the compiled artificial intelligence model, deactivating the compress the feature map.

11. The method of claim 9, wherein skipping the calculation with respect to the designated value and calculating the value to be calculated subsequent to the designated value includes performing a zero-skipping function that skips a calculation for "0" if "0" exists in the feature map.

12. The method of claim 10, wherein compressing the feature map is a function of extracting a value excluding a value of "0" from the feature map and compressing the feature map based on the extracted value.

13. The method of claim 11, further comprising:

in response to calculating the value, skipping a calculation with respect to "0" and performing a calculation with respect to a value other than "0" to be calculated next in case that a feature map corresponding to a result value of a previous hidden layer of the artificial intelligence model is used as an input value and "0" exists in the feature map; and
performing a calculation with respect to a multiply accumulate calculation (MAC) calculation result.

14. The method of claim 12, further comprising:

in response to compressing the feature map, compressing a feature map with values other than "0" from the feature map corresponding to an output value of a hidden layer after a calculation of the hidden layer of the artificial intelligence model is completed; and
storing the compressed feature map in the memory.

# FIG. 1

ELECTRONIC DEVICE — 101 / 100

INPUT MODULE — 150

SOUND OUTPUT MODULE — 155

DISPLAY MODULE — 160

MEMORY — 130
- VOLATILE MEMORY — 132
- NON-VOLATILE MEMORY — 134
  - INTERNAL MEMORY — 136
  - EXTERNAL MEMORY — 138

PROGRAM — 140
- APPLICATIONS — 146
- MIDDLEWARE — 144
- OPERATING SYSTEM — 142

BATTERY — 189

PROCESSOR — 120
- MAIN PROCESSOR — 121
- AUXILIARY PROCESSOR — 123

COMMUNICATION MODULE — 190
- WIRELESS COMMUNICATION MODULE — 192
- WIRED COMMUNICATION MODULE — 194

POWER MANAGEMENT MODULE — 188

SUBSCRIBER IDENTIFICATION MODULE — 196

ANTENNA MODULE — 197

AUDIO MODULE — 170

SENSOR MODULE — 176

INTERFACE — 177

HAPTIC MODULE — 179

CAMERA MODULE — 180

CONNECTION TERMINAL — 178

SECOND NETWORK — 199

ELECTRONIC DEVICE — 104

FIRST NETWORK — 198

ELECTRONIC DEVICE — 102

SERVER — 108

# FIG. 2A

# FIG. 2B

230

220

| COMPILER | — 221 |

| ACTIVATION FUNCTION IDENTIFICATION UNIT | — 222 |

| FUNCTION ACTIVATION DETERMINATION UNIT | — 223 |

CALCULATION UNIT — 224

| FIRST FUNCTION UNIT | — 225 |

| SECOND FUNCTION UNIT | — 226 |

MEMORY

# FIG. 3

START

↓

LOAD ARTIFICIAL INTELLIGENCE MODEL — 301

↓

FIRST-TYPE FUNCTION IS INCLUDED IN ACTIVATION FUNCTION? — 320

**NO →**

**YES ↓**

| ACTIVATE FIRST FUNCTION AND ACTIVATE SECOND FUNCTION — 331 | DEACTIVATE FIRST FUNCTION AND DEACTIVATE SECOND FUNCTION — 332 |

↓

| ACTIVATE FIRST FUNCTION TO PERFORM MAC CALCULATION AND ACTIVATION CALCULATION — 341 | PERFORM MAC CALCULATION AND ACTIVATION CALCULATION — 342 |

↓

PERFORM SECOND FUNCTION — 351

↓

OUTPUT RESULT AND STORE RESULT IN MEMORY — 360

↓

END

FIG. 4

# FIG. 5

(a) Sigmoid $\sigma(x) = \dfrac{1}{1+e^{-x}}$

(b) tanh $\tanh(x)$

(c) ReLU $\max(0, x)$

(d) Leaky ReLU $\max(0.1x, x)$

(e) Maxout $\max(w_1^T x + b_1, w_2^T x + b_2)$

(f) ELU $\begin{cases} x & x \geq 0 \\ \alpha(e^x - 1) & x < 0 \end{cases}$

FIG. 6

Percentage of Compressed FM Size
On Inception V3

Percentage of Compressed FM Size
On DeepLab V3

Average: 50.8%

Average: 50.8%

%

%

Layers

Layers

EP 4 546 220 A1

FIG. 7

# FIG. 8

Quad-Tree Header

0110

0000    1110    1111    0000

1111  1111  1111  0000  1110  1101  1011  0111

Non-zero Features

Feature-map Group

Non-zero Features

Meta-data

Compressed feature-map

Compressed feature map

| Stream length | 010 | 0110 | 1110 | 1111 | 1111 | • • • • | 0111 | XXX | XXX | • • • • | XXX | |
|---|---|---|---|---|---|---|---|---|---|---|---|---|

Truncated nonzero bitwidth

Quad-tree Header

Nonzero Features

FIG. 9

# FIG. 10

```
                    ┌──────────────────┐
                    │      START       │
                    └──────────────────┘
                             │
                             ▼
              ┌──────────────────────────────┐  1010
              │  LOAD AND COMPILE ARTIFICIAL  │
              │       INTELLIGENCE MODEL      │
              └──────────────────────────────┘
                             │
                             ▼
                        1020
                    ◇─────────────◇
              ┌────────────────────────────┐
              │       FIRST-TYPE           │
              │   ACTIVATION FUNCTION IS        NO
              │ INCLUDED IN COMPILED ARTIFICIAL ──────────┐
              │   INTELLIGENCE MODEL?      │              │
              └────────────────────────────┘              │
                        │                                  │
                       YES                                 │
                        │                                  ▼
        ┌──────────────────────┐ 1030     ┌──────────────────────────┐ 1040
        │  ACTIVATE FIRST FUNCTION │       │ DEACTIVATE FIRST FUNCTION │
        └──────────────────────┘           └──────────────────────────┘
                        │                                  │
                        ▼                                  ▼
        ┌──────────────────────────────────────────────────────────┐
        │                          END                             │
        └──────────────────────────────────────────────────────────┘
```

## INTERNATIONAL SEARCH REPORT

| International application No. |
|---|
| **PCT/KR2023/012499** |

### A. CLASSIFICATION OF SUBJECT MATTER

**G06N 3/08**(2006.01)i; **G06N 3/04**(2006.01)i

According to International Patent Classification (IPC) or to both national classification and IPC

### B. FIELDS SEARCHED

Minimum documentation searched (classification system followed by classification symbols)

G06N 3/08(2006.01); G06N 3/04(2006.01); G06N 3/063(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 활성화 함수(activation function), ReLU(rectifier linear unit), 제로 스키핑(zero skipping), 피처 맵(feature map), 압축(compression)

### C. DOCUMENTS CONSIDERED TO BE RELEVANT

| Category* | Citation of document, with indication, where appropriate, of the relevant passages | Relevant to claim No. |
|---|---|---|
| Y | PINTO, Dennis et al. Mixture-of-Rookies: Saving DNN Computations by Predicting ReLU Outputs. arXiv:2202.04990v1. February 2022. [Retrieved on 06 November 2023]. Retrieved from <https://arxiv.org/pdf/2202.04990.pdf>.<br>    See pages 4 and 8; and figure 10. | 1-14 |
| Y | LIANG, Tailin et al. DYNAMIC RUNTIME FEATURE MAP PRUNING. arXiv:1812.09922v2. April 2019. [Retrieved on 06 November 2023]. Retrieved from <https://arxiv.org/pdf/1812.09922v2.pdf>.<br>    See pages 1 and 4-5; and figure 3. | 1-14 |
| A | KR 10-2021-0082081 A (SEOUL NATIONAL UNIVERSITY R&DB FOUNDATION) 02 July 2021 (2021-07-02)<br>    See paragraphs [0016]-[0019]. | 1-14 |
| A | KR 10-2020-0125212 A (SK HYNIX INC.) 04 November 2020 (2020-11-04)<br>    See claims 1-2. | 1-14 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 November 2023** | **22 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/012499** |

**C. DOCUMENTS CONSIDERED TO BE RELEVANT**

| Category* | Citation of document, with indication, where appropriate, of the relevant passages | Relevant to claim No. |
|---|---|---|
| A | US 2021-0264247 A1 (INTERNATIONAL BUSINESS MACHINES CORPORATION) 26 August 2021 (2021-08-26) <br> See claim 1; and figure 5. | 1-14 |

Form PCT/ISA/210 (second sheet) (July 2022)

**INTERNATIONAL SEARCH REPORT**
Information on patent family members

International application No.

**PCT/KR2023/012499**

| Patent document cited in search report | | | Publication date (day/month/year) | Patent family member(s) | | | Publication date (day/month/year) |
|---|---|---|---|---|---|---|---|
| KR | 10-2021-0082081 | A | 02 July 2021 | None | | | |
| KR | 10-2020-0125212 | A | 04 November 2020 | CN | 111860800 | A | 30 October 2020 |
| | | | | JP | 2020-184309 | A | 12 November 2020 |
| | | | | US | 2020-0342294 | A1 | 29 October 2020 |
| US | 2021-0264247 | A1 | 26 August 2021 | US | 11562235 | B2 | 24 January 2023 |

Form PCT/ISA/210 (patent family annex) (July 2022)